# EUROPÄISCHE PATENTANMELDUNG

(11) **EP 0 958 884 A1**
(43) Veröffentlichungstag der Anmeldung: **24.11.1999**
(21) Anmeldenummer: 98810464.2
(22) Anmeldetag: 19.05.1998
(51) Int. Cl.: B23K 26/08, B23P 23/02

(54) **Verfahren zum Bearbeiten von Werkstücken sowie Werkzeugmaschine**

(71) Anmelder: Lastec Laserjob AG, 2555 Brügg (CH)
(72) Erfinder: Herren, Peter, El. Ing. HTL, 2564 Bellmund (CH)
(74) Vertreter: Frauenknecht, Alois J.

(57) **Zusammenfassung**

Lasermaterialbearbeitungen werden häufig auf speziellen Maschinen oder mit speziellen Geräten ausgeführt und erfordern Nachbearbeitungen an spanenden Werkzeugmaschinen mit entsprechenden Umrüstungen.

Erfindungsgemäss wird am Spindelstock (17) einer Werkzeugmaschine (13) über ein Strahlführungsrohr (12) ein Laserstrahl (5) zugeführt, welcher an einer Gelenkstelle (D) in eine Fokussieroptik (35) strahlt. Die Gelenkstelle (D) ist mit ihrer darunter befindlichen Fokussieroptik (35) in einem Zentrierkonus (36) präzise geführt und gehalten. Durch einen Schwenkmechanismus kann der Laser-Bearbeitungskopf aus dem Spindelstock (17) entfernt werden und die Maschine (13) kann in üblicher Weise spanende Bearbeitungen ausführen.

Im Verfahrensablauf werden Laserbearbeitungen vor der spanenden Bearbeitung vorgenommen, wobei eine Nullpunkt-Korrektur zwischen der Laserbearbeitung und der spanenden Bearbeitung erfolgt, welche auf rechnerischem Wege Systemfehler korrigiert.

## Beschreibung

Die vorliegende Erfindung bezieht sich auf ein Verfahren nach dem Oberbegriff des Patentanspruchs sowie auf eine zur Durchführung des Verfahrens geeignete Werkzeugmaschine.

Die Lasermaterialbearbeitung hat in zahlreichen industriellen Fertigungen Eingang gefunden; es lassen sich mittels Laser aus nahezu jedem beliebigen Material dreidimensionale Strukturen herausarbeiten. Durch geeignete Laserquellen, Strahlführungen und optische Einrichtungen können in Verbindung mit numerischen Steuerungen in vielen Fällen die Werkstücke auf die gewünschte Toleranz fertig bearbeitet werden. Es gibt aber in der Präzisionsmechanik, insbesondere Feinwerk- und Mikrotechnik Einsatzbereiche, in denen die Genauigkeit und Oberflächengüte der Laserbearbeitung nicht genügt und entweder eine Nachbearbeitung durch konventionell arbeitende Werkzeugmaschinen erforderlich ist, oder diese im vornherein zum Einsatz gelangen.

Im weiteren wurde in der Praxis immer wieder mittels roboterähnlichen Einrichtungen versucht, Laseroperationen an auf anderen Maschinen aufgespannten Werkstücken auszuführen, was zu grossen und meist nicht tolerierbaren Ungenauigkeiten führte und entsprechende weitere Nachbearbeitungen erforderte.

Es ist daher Aufgabe der vorliegenden Erfindung ein Verfahren und eine Werkzeugmaschine zu schaffen, welche auf rationelle Art den Einsatzbereich der Lasermaterialbearbeitung erweitern und die Güte, insbesondere die am Werkstück erzielbare Bearbeitungsgenauigkeit erhöhen. Die Gesamtgenauigkeit des Systems soll dabei einzig durch die jeweils gewählte Bearbeitungsmethode und nicht durch einen Systemwechsel beeinflusst werden.

Diese Aufgabe wird durch die Merkmale des Anspruchs 1 gelöst.

Der Erfindungsgegenstand zeichnet sich durch seine besonders einfache Möglichkeit der Integration in bestehende Fabrikationsabläufe aus.

Der im Patentanspruch verwendete Begriff Ruhe-/Parkposition bezieht sich auf eine Position innerhalb der Werkzeugmaschine, bei dem die spanende Bearbeitung durch die Laservorrichtung nicht gestört ist bzw. die spanende Bearbeitung den Laser-Bearbeitungskopf nicht beschädigen kann. Die Ruhe- und die Parkposition können identisch sein; es können aber zur Verkürzung der Einrichtungszeiten zwei verschiedene Positionen vorgesehen sein, wobei die Ruheposition eine Ausschwenklage des Laser-Bearbeitungskopfes darstellt, der die nächstfolgende spanende Bearbeitung nicht stört. - Dementsprechend ist die Parkposition definiert als Lage, welche keine spanenden Bearbeitungen beeinträchtigt und/oder den Laser-Bearbeitungskopf gefährdet.

Im Gegensatz zu bekannten Anordnungen, bei denen ein Laserstrahl zu einem dedizierten Laser-Bearbeitungszenter geführt wird, erlaubt der Erfindungsgegenstand alle originären Funktionen einer Werkzeugmaschine uneingeschränkt weiter zu benutzen, d.h. das spanende Bearbeitungszenter wird um eine zusätzliche Bearbeitungsmethode erweitert, ohne jegliche Abstriche oder Qualitätseinbussen.

Die erfindungsgemässe Zuordnung der Laserquelle zu einer Werkzeugmaschine bzw. zu einem Bearbeitungszentrum lässt sich am einfachsten mittels eines flexiblen, an sich bekannten Strahlarm (K.H. Arnold GmbH & Co, D-882214 Ravensburg) mit konstanter Länge des Strahlenganges realisieren, dies erfordert nur wenig Änderungen an der Werkzeugmaschine bzw. eine Ergänzung des numerischen Steuerungsprogramms um ein zusätzliches Werkzeug mit entsprechenden Parametern. Die Aufnahme des Laser-Bearbeitungskopfes erfolgt im gleichen Werkzeughalter, wie vorangegangene oder nachfolgende Operationen, so dass keine stochastischen Fehler entstehen. Der inhärente systematische Fehler lässt sich zudem korrigieren, wodurch nur minimale Materialzugaben nötig sind für die nachfolgenden Operationen. - Somit beeinflusst lediglich die Bearbeitungsmethode und nicht der Wechsel von der Lasermaterialbearbeitung zur spanenden Bearbeitung bzw. vice versa die Gesamtgenauigkeit des Systems.

Die Positionsgenauigkeit des Laserstrahls ist durch die Genauigkeit der Werkzeugmaschine vorgegeben; die Oberflächenrauhigkeit der resultierenden Lasermaterialbearbeitung ist dagegen durch das verwendete Lasersystem und durch die Materialeigenschaften des Werkstückes bestimmt. In jedem Fall kann durch den nachträglichen Einsatz von spanenden Werkzeugen die Massgenauigkeit und Güte der Bearbeitung gegenüber der Laserbearbeitung gesteigert werden.

Die bei der Laserbearbeitung entstehenden Emissionen bewegen sich im Bereich derjenigen einer spanenden Bearbeitung, so dass ausser einem Blendschutz an der Werkzeugmaschine keine weiteren Schutzvorkehrungen nötig sind.

Das Ausschwenken des Laser-Bearbeitungskopfes, nach dessen Einsatz, ermöglicht eine Handhabung der Werkzeugmaschine in gewohnter Weise und verhindert dessen Beschädigung.

Der in Anspruch 2 beschriebene Werkzeugwechsel ist besonders einfach durchzuführen und ergibt eine sehr genaue Einspannung des Laser-Bearbeitungskopfes.

Die Nullpunkt-Korrektur nach Anspruch 3 erlaubt die Eliminierung von statistischen Fehlern und die Minimierung von Materialzugaben bei anschliessenden spanenden Feinbearbeitungen.

Eine starre Ausgestaltung des Laser-Bearbeitungskopfes ergibt ein Höchstmass an Axial- und Winkelgenauigkeit, sie erhöht somit die Genauigkeit der Bearbeitung und erspart zusätzliche Justierarbeiten, so dass nur die übliche notwendige Fokussierung des Strahls erforderlich ist; Anspruch 4.

Im Falle einer seitlichen Strahlzuführung ist die Ausführungsform nach Anspruch 5 zweckmässig, wobei in den Gelenken die üblichen, gekühlten metallischen Spiegel eingebaut sind.

Die direkte mechanische Verbindung des Laser-Bearbeitungskopfes mit der Strahlzuführung gemäss Anspruch 6 ist platzsparend und wirtschaftlich.

Eine am Laser-Bearbeitungskopt nach Anspruch 7 ausgestaltete Spannvorrichtung lässt einen Werkzeugwechsel zu, in gleicher Art, wie er bei den spanenden Werkzeugen üblich ist.

Besonders vorteilhaft ist in Bezug auf die Handhabbarkeit und Genauigkeit eine Spannvorrichtung nach Anspruch 8.

Durch den Einbezug einer Hohlwelle nach Anspruch 9 in die Werkzeugmaschine kann der Laserstrahl besonders einfach zum Bearbeitungskopf geführt werden, so dass eventuell sogar ganz auf aufwendige Strahlführungen in speziellen Schutzrohren verzichtet werden kann, insbesondere bei kleineren Strahl-Leistungen.

Ein gemäss Anspruch 10 ausgestalteter Laser-Bearbeitungskopf ist besonders günstig und kann ggf. sogar im Werkzeugmagazin, zusammen mit den spanenden Werkzeugen gelagert und wie diese gewechselt werden.

Die koaxiale Zuführung des Laserstrahls erlaubt den in Anspruch 11 erwähnten Anbau der Laserquelle und ist besonders wirtschaftlich, besonders bei kleineren und mittleren Leistungen.

Anhand von schematischen Zeichnungen wird der Erfindungsgegenstand nachfolgend an Werkzeugmaschinen in Kreuztischbauweise mit vertikalen Hauptachsen erläutert, wobei gleiche Bezugszeichen in allen Figuren verwendet sind.

Es zeigen:
- Fig. 1: ein CNC-Bearbeitungszenter mit einem CO₂-Laser und flexiblem Strahlarm, in Frontalansicht,
- Fig. 2: das Bearbeitungszenter Fig. 1 in einer Draufsicht von oben,
- Fig. 3: Details zur Einkoppelung des Laserstrahls in das Bearbeitungszenter,
- Fig. 4: eine Draufsicht nach Fig. 3 von oben,
- Fig. 5: Einzelheiten zur mechanischen Einkoppelung der Laseroptik und der Strahlführung,
- Fig. 6: die Darstellung Fig. 5 in Übernabmeposition, in einer Ansicht von oben
- Fig. 7: eine analoge Darstellung zu Fig. 6 in Parkposition und
- Fig. 8: eine Variante eines CNC-Bearbeitungszenters mit einer angeflanschten Laserquelle und einer Strahlzuführung über deren Hohlspindel.

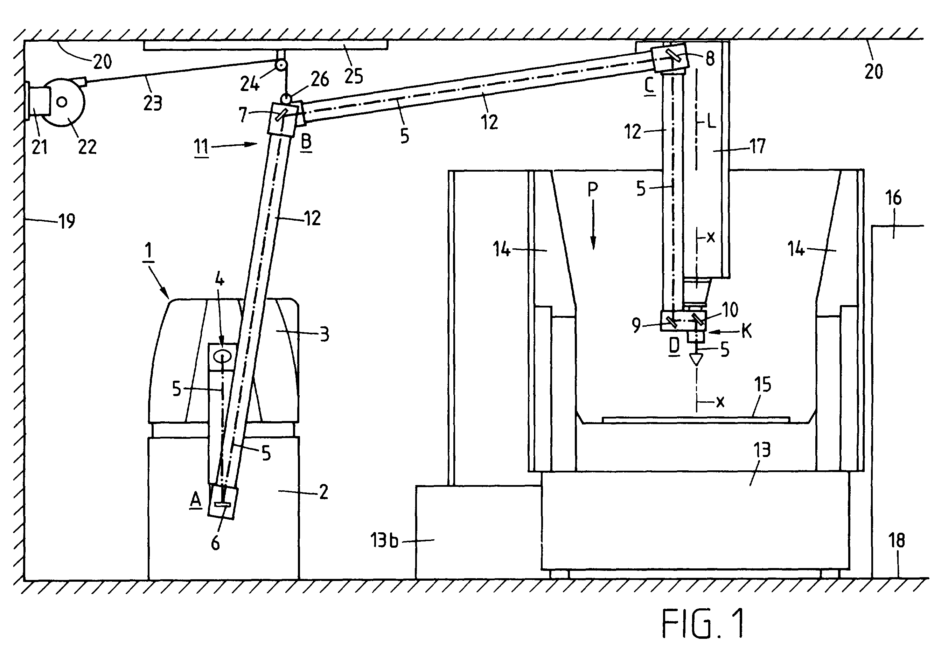

In Fig. 1 ist mit 1 ein handelsüblicher CO₂-Laser (ROFIN-SINAR Laser GmbH, Hamburg) bezeichnet. Dieser ist erschütterungsfrei auf einem Sockel 2 auf einem Werkstattboden 18 gelagert. Eine Haube 3 wirkt als Schutz für die elektrischen und optischen Bestandteile der Laseranordnung. Stirnseitig ist ein Strahlformer 4, eine Justierstrecke, am Laser 1 angeordnet, welcher anschliessend den kollinearen Laserstrahl 5 in Strahlführungsrohre 12 einbringt. Der Laserstrahl 5 wird über Umlenkspiegel 6 - 10 zu einer CNC-Bearbeitungsmaschine 13 geführt und steht dort für Bearbeitungszwecke zur Verfügung.

Die handelsüblichen Strahlführungsrohre 12 sind als einzelne Segmente über Gelenke A - D miteinander verbunden. In den Gelenkstellen A - D befinden sich die metallischen Umlenkspiegel 6 - 10, so dass sich unabhängig von der Position des Gelenkarms 11 ein konstanter optischer Weg einstellt. Der Gelenkarm 11 besitzt an der Gelenkstelle B eine obere Öse 26, in welche ein entsprechender Haken eingeklinkt ist, der mit einem Seil 23, über eine Umlenkrolle 24, an einer Laufschiene 25 der Decke 20 verbunden, über eine Seiltrommel 22 einem Federzug unterworfen ist. Die Seiltrommel 22 ist mittels Supports 21 an einer Wand 19 befestigt und entlastet den Gelenkarm 11, so dass auf die Gelenkstelle D nur eine minimale Kraft wirkt.

Das in der Gelenksstelle D mündende Strahlführungsrohr 12 ist parallel zum Lot L gerichtet, welches hier identisch mit der Spindelachse ist; die optische Achse x--x einens Laser-Bearbeitungskopfes K fluchtet mit der Spindelachse. Ebenfalls ist ein Maschinenbett 15, welches der Werkstückspannung dient, ersichtlich.

Im linken Teil der Bearbeitungsmachine ist mit einem senkrechtem Pfeil eine Parkposition P für den Laser-Bearbeitungskopf K bezeichnet.

Die Bearbeitungsmaschine 13 ist ein modifiziertes, handelsübliches CNC-Bearbeitungszenter (HERMLE, C 800 U, D-78556 Gosheim) mit einer Steuerung (Sinumeric 840 D der Firma Siemens AG, München). Diese Maschine 13 weist einen Spindelstock 17 mit einer vertikalen Motorspindel auf und besitzt einen massiven Maschinenständer 14 und übliche Hilfsaggregate 13b und eine Steuerkonsole 16 mit integriertem Rechner.

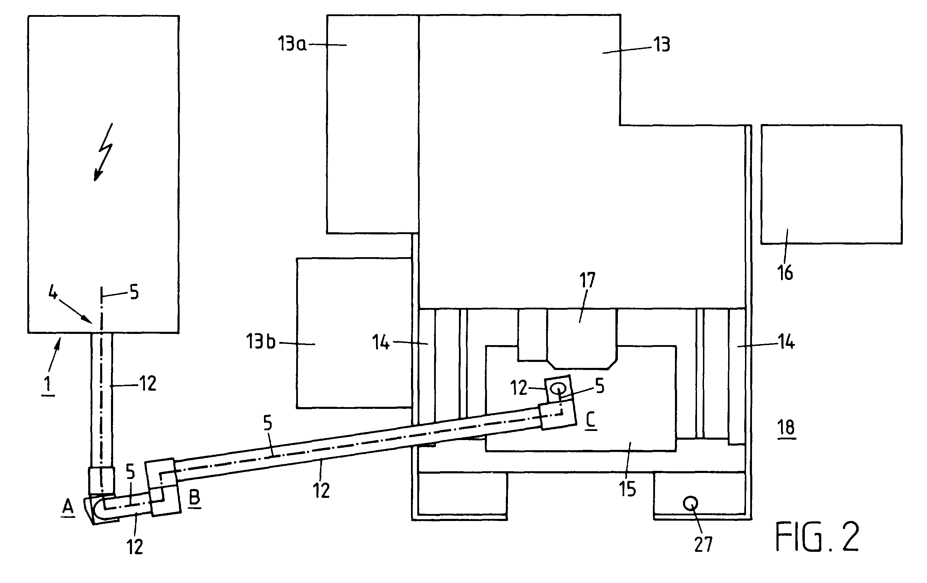

Die Anlage nach Fig. 1 ist in Fig. 2 von oben betrachtet bezeichnet und zeigt die gleichen Funktionsteile wie auch weitere Hilfsaggregate 13a; zusätzlich ist schematisch ein Notschalter 27 für den Laser vorgesehen, welcher als Türüberwachungsschalter ausgebildet ist.

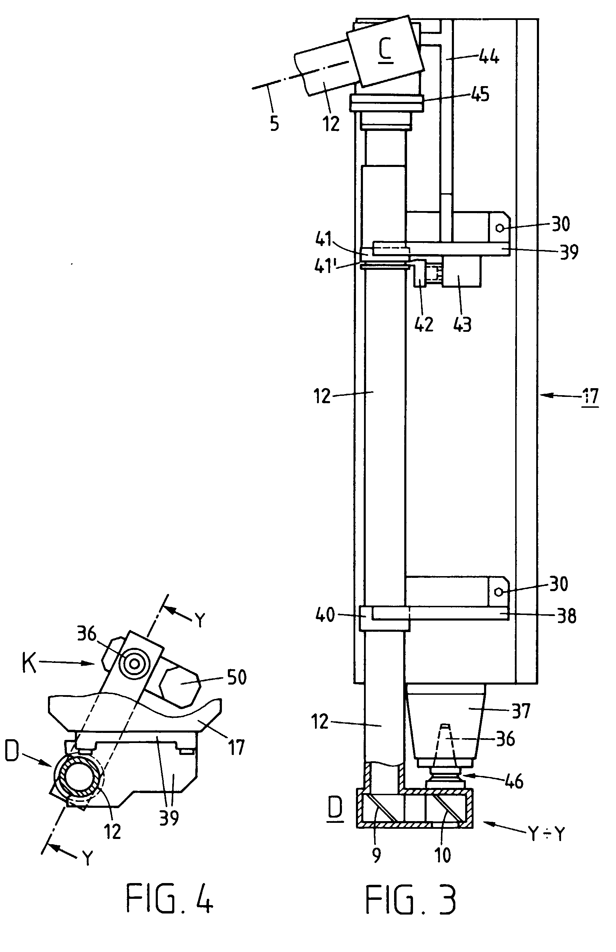

Figur 3 zeigt die einfache und präzise Zuführung des Laserstrahls 5 über ein Gelenk C mittels Strahlführungsrohren 12. Es sind daher zwei Strahlführungs-Supporte 38 und 39 mittels Montageschrauben 30 am Spindelstock 17 der Bearbeitungsmaschine 13 aufgeschraubt. Die beiden Supporte 38 und 39 positionieren, in linksseitigen Ausnehmungen, das vertikale Strahlführungsrohr 12 in seiner Arbeitsstellung. Am Strahlführungsrohr 12 sind eine untere und eine obere Lagerbüchse 40 bzw. 41 vorgesehen, wobei die Büchse 41 zusätzlich eine Klemmnut 41' aufweist, in welche die Spitze eines Greifers 42 eines Pneumatikzylinders 43 passt. Die formschlüssige Zuordnung der Lagerbüchsen 40 und 41 zu den Ausnehmungen in den Supports 38 und 39 gewährleistet eine präzise und drehbare Halterung der Strahlführungsrohre 12.

Das Gelenk C ist über Verbindungsflansche 45 mit dem vertikalen Strahlführungsrohr 12 verbunden.

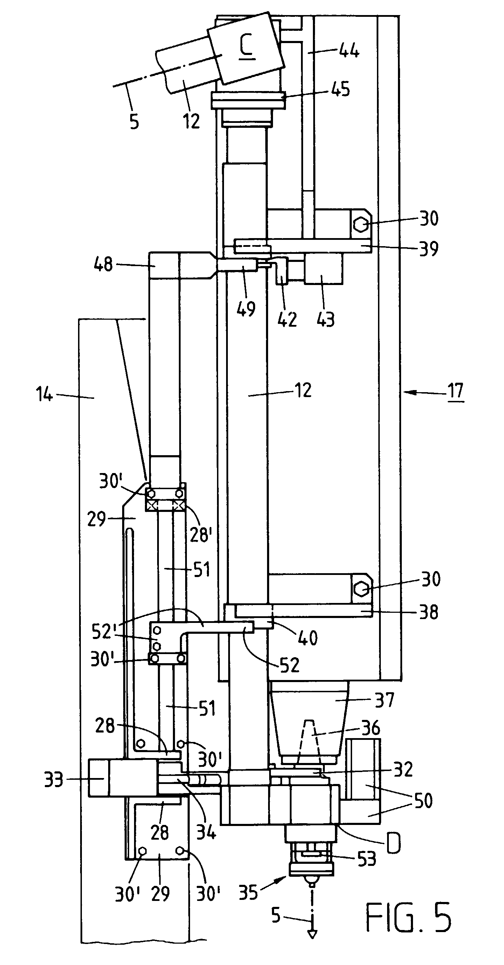

Die eigentliche Positionierung der in Fig. 3 abgenommenen Laseroptik, vgl. Fig. 5, Position 35, erfolgt über den in der Werkzeugmaschine vorhandenen Zentrierkonus 36 in der Werkzeugaufnahme 37. Eine Ringnut 46 dient dem Einführen und Herausnehmen des Zentrierkonus 36.

Aus Übersichtlichkeitsgründen sind im Teilschnitt Y--Y, Fig. 3, im Gelenk D, nur die Umlenkspiegel 9 und 10 schematisch dargestellt. Im weiteren sind Steuerleitungen 44, welche sich in einem Schutzrohr befinden ersichtlich.

Die Draufsicht Fig. 4 zeigt wiederum den Spindelstock 17 mit dem darauf geschraubten Strahlführungsrohr-Support 39 und dem hier in Schnittdarstellung gezeigten Strahlführungsrohr 12. Seitlich überragend ist eine Abstandsregelung 50 ersichtlich, die in an sich bekannter Weise, mittels Servomotor den Abstand der Laseroptik zum Werkstück reguliert. Der Zentrierkonus 36 ist durch konzentrische Kreise dargestellt; durch diesen und das Zentrum des Strahlführungsrohrs 12 ist die Schnittlinie Y--Y gelegt, wodurch der in Fig. 3 ersichtliche Schnitt Y--Y in einer verkürzten Schräglage erscheint.

Die Fig. 5 ist um die Elemente zur mechanischen Ein- und Auskoppelung der Strahlführung mit der Laseroptik ergänzt.

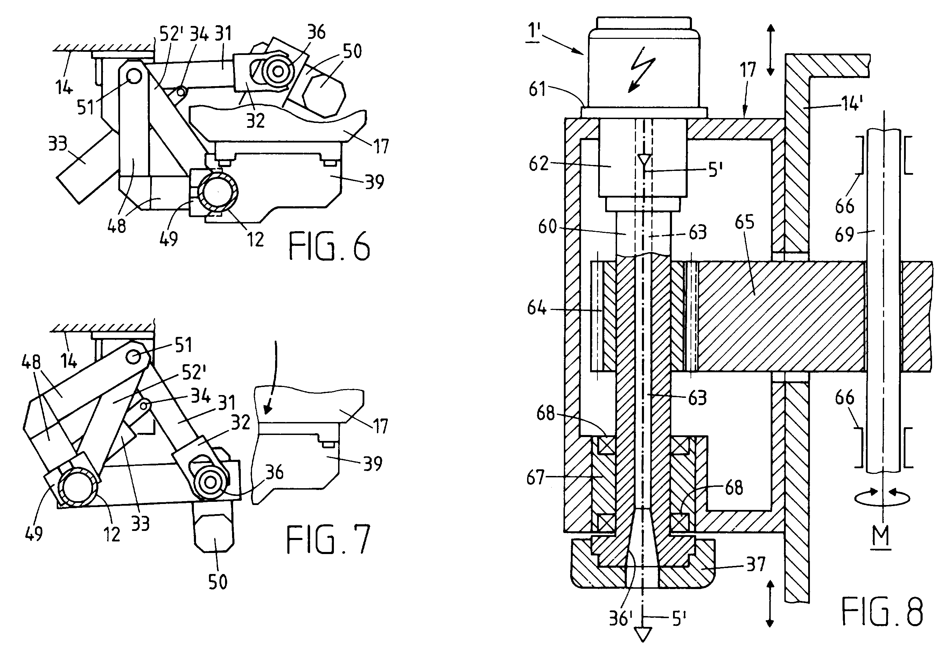

Auf einem Gelenk-Support 29, der mittels Montageschrauben 30' am ebenfalls dargestellten Maschinenständer 14 aufgeschraubt ist, befindet sich in Gelenkträgern 28 ein unterer Greifarm 31 mit einer Greifzange 32 und einer Schwenkwelle 51; siehe Fig. 6.

Der Greifarm 31 ist durch einen Antriebszylinder 33 betätigbar.

Die auf dem Schutzrohr 12 befestigte untere Lagerbüchse 40 ist durch einen Lager-Teilring 52 geführt, welcher über seinen Arm 52' mittels Montageschrauben 30' auf der Schwenkwelle 51 fixiert ist.

Die Schwenkwelle 51 ist an einem oberen Lager 28' nochmals geführt und endet in einem abgekröpften, vierkantförmigen Greiferarm 48 mit angeschlossener Greiferzange 49, welche ebenfalls als Lager-Teilring ausgebildet ist. Der Greiferarm 48 besteht in seinem vertikalen Teil aus einem Hohlprofil, durch welches Pneumatik- und Steuerleitungen geführt sind.

Die Gelenkstelle D befindet sich in Fig. 5 in der Arbeitsposition, d.h. der Zentrierkonus 36 ist in der Werkzeugaufnahme 37 eingerückt. In dieser Arbeitsposition befindet sich die untere Greif-Zange 32 mit ihren Federn im Eingriff in der Ringnut 46, Fig. 3.

In Achsrichtung des Zentrierkonus 36 ist unterhalb der Gelenkstelle D eine in bekannter Weise aufgebaute Fokussieroptik 35 mit manuell betätigbarem Stellring 53 angeordnet; der austretende Laserstrahl ist wiederum mit 5 bezeichnet.

Die nachfolgende Fig. 6 zeigt die vorstehend beschriebenen Teile in einer Draufsicht.

Um nach dem Einsatz der Laserbearbeitungsvorrichtung diese in ihre Park- und/oder Ruhestellung zu schwenken, wird der Zentrierkonus 36 in bekannter Weise aus der Werkzeugaufnahme 37 herausgedrückt und anschliessend der Spindelstock 17 nach oben verfahren. Dann wird der Antriebszylinder 33 mit Druckluft beaufschlagt, so dass dieser über die Schubstange 34 den Greiferarm 31 im Uhrzeigersinn, in Pfeilrichtung, dreht, vgl. Fig. 7. Aus Stabilitätsgründen ist ein Verstrebungs-Arm 52' zwischen der Schwenkwelle 51 und der Greiferzange 49 angeordnet.

Die Drehbewegung kann so gesteuert werden, dass die Laservorrichtung sowohl in eine Parkposition - nahe beim Spindelstock 17 - als auch in eine Ruheposition, seitlich hinter dem Spindelstock 17 schwenkbar ist.

Diese beiden Positionen ermöglichen einen ordentlichen Betrieb der Werkzeugmaschine und den sofortigen Einsatz der Laservorrichtung bzw. deren Ausfahren aus dem Bereich des Spindelstocks 17, was eine grösstmögliche Flexibilität beim Einsatz der Bearbeitungsmittel erbringt.

Die Teilschnittdarstellung Fig. 8 zeigt eine modifizierte Version einer handelsüblichen Werkzeugmaschine, wobei der Maschinenständer wiederum mit 14' bezeichnet ist. Oberhalb des Spindelstocks 17 ist hier ein YAG-Laser 1' angeordnet, der auf einem hydraulisch/pneumatischen Schwingungslager 61 ruht.

Der austretende Laserstrahl 5' passiert ein oberes Spindellager 62, welches auf einer Hohlwelle 60 mit einer Bohrung 63 angeordnet ist. Zwischen dem oberen Spindellager 62 und einem unteren Spindellager 67 befindet sich ein Stirnrad 64, welches seinerseits durch auf einer Keilwelle 69 verschiebbares Antriebsrad 65 mit Antriebslager 66, über einen Motor M angetrieben wird.

Das Spindellager 67 ist in notorisch bekannter Weise mit Schräg-Rollenlager 68 ausgerüstet. Die Hohlwelle 60 trägt stirnseitig eine Werkzeugaufnahme 37 und besitzt im Inneren einen Zentrierkonus 36'.

Die Anordnung nach Fig. 8 ist besonders kostengünstig und erlaubt Laserbearbeitungen auf engstem Raum.

Die anhand von Werkzeugmaschinen in Kreuztischbauweise mit vertikalen Hauptachsen geführten Überlegungen lassen sich selbstverständlich auch auf andere Maschinen übertragen und erfordern dort mehr oder weniger grosse Änderungen.

In Bearbeitungszentern, bei denen keine hohe Laserleistung erforderlich ist, beispielsweise wenn nur Markierungen und/oder Beschriftungen erforderlich sind, kann der Laser auch in die Achsen direkt eingebaut werden, wofür sich Festkörperlaser anbieten.

Die Variante nach Fig. 8 ergibt ebenfalls die im Oberbegriff des Patentanspruchs geforderte konstante Länge der Strahlführung; es sind aber Lösungen denkbar, bei denen aus Gründen der mechanischen Entkoppelung zwischen dem Laser und der Werkzeugmaschine diese Forderung - unter Einbezug einer Verschlechterung der Strahlqualität - nicht vollständig erfüllt ist.

Selbstverständlich lässt sich der Erfindungsgegenstand auch in umformende Maschinen integrieren, insbesondere vorteilhaft in Fällen, bei denen in einer Aufspannung Materialabtragungen und/oder Trennvorgänge zweckmässig sind.

### Bezeichnungsliste

- 1: Laser (CO₂ Laser, 2 kW)
- 1': Laser (YAG-Laser an Werkzeugmaschine)
- 2: Sockel
- 3: Haube (Abdeckung)
- 4: Strahlformer (Justierstrecke)
- 5: Laserstrahl
- 5': Laserstrahl von 1'
- 6 - 10: Umlenkspiegel
- 11: Gelenkarm
- 12: Strahlführungsrohre (Schutzrohre)
- 13: CNC-Bearbeitungsmaschine
- 13a,b: Hilfsaggregate von 13 (Antrieb, Kühlwasser etc.)
- 14, 14': Maschinenständer; Gehäuse
- 15: Maschinenbett / Werkstückaufspannung
- 16: Steuerungskonsole mit Rechner
- 17: Spindelstock (Hauptspindel; Motorspindel)
- 18: Boden (Werkstatt)
- 19: Wand
- 20: Decke
- 21: Support für 22
- 22: Seiltrommel mit Federzug
- 23: Seil
- 24: Umlenkrolle
- 25: Laufschiene
- 26: Öse / Haken
- 27: Notschalter Laser / Türüberwachungsschalter
- 28: Gelenkträger (Flansche)
- 28': oberes Lager
- 29: Gelenk-Support
- 30-30': Montageschrauben
- 31: Greiferarm (unterer)
- 32: Greif-Zange (untere, mit Federn)
- 33: Antriebszylinder (pneumatisch)
- 34: Schubstange
- 35: Fokussieroptik
- 36,36': Zentrierkonen; Spannvorrichtung
- 37: Werkzeugaufnahme
- 38: unterer Strahlführungsrohr-Support (Lagerring)
- 39: oberer Strahlführungsrohr-Support (Lagerring)
- 40: untere Lagerbüchse (fest auf Rohr 12)
- 41: obere Lagerbüchse (fest auf Rohr 12)
- 41': Klemmnut in 41
- 42: Verriegelung mit Greiferspitze
- 43: Pneumatikzylinder zu 42
- 44: Steuerleitungen (Schutzrohr)
- 45: Verbindungsflansche
- 46: Ringnut
- 48: Greiferarm
- 49: Greiferzange
- 50: Motor (Abstandsregelung)
- 51: Schwenkwelle
- 52: Lager-Teilring
- 52': Arm zu 52
- 53: Stellring für Fokussierung
- 54: Verstrebung zu 48
- 60: Hohlwelle
- 61: Schwingungslager (pneumatisch/hydraulisch)
- 62: oberes Spindellager
- 63: Bohrung in 60
- 64: Stirnrad auf 60; vertikal verschiebbar auf 69
- 65: Stirnrad (Antrieb)
- 66: Antriebslager
- 67: unteres Spindellager
- 68: Schräg-Rollenlager
- 69: Keilwelle
- A - D: Gelenke / Gelenkstellen
- K: Laser-Bearbeitungskopf
- L: Hauptachse
- M: Antriebsmotor
- P: Parkposition
- x--x: optische Achse
- Y--Y: Schnittkante / Schnitt

## Patentansprüche

1. Verfahren zur zwei- oder dreidimensionalen Bearbeitung von Werkstücken mittels einer Laserquelle mit angeschlossener Strahlformung und einer Strahlführung bei konstanter Länge des Strahlenganges, sowie mit einer Werkzeugmaschine mit spanenden Werkzeugen und numerischer Steuerung, dadurch gekennzeichnet, dass der Laserstrahl (1) durch die Strahlführung (11,12) parallel zur und in die Hauptachse (L) oder direkt in einer Achse der Werkzeugmaschine geführt wird, dass zumindest ein Laser-Bearbeitungskopf (K) schwenkbar und parallel zur und in wenigstens einer Achse einer Spindel mechanisch verschiebbar angeordnet wird, derart, dass wahlweise der Laser-Bearbeitungskopf (K) oder ein spanendes Werkzeug in wenigstens einen Werkzeughalter und/oder Spanner (36, 37) einschiebbar ist und auf das Werkstück einwirkt, ohne dass eine Änderung oder ein Wechsel der Aufspannung des Werkstücks in der Werkzeugmaschine (13) erforderlich ist, wobei während der spanenden Bearbeitung der Laser-Bearbeitungskopf (K) und/oder die innerhalb der Werkzeugmaschine (13) vorhandene Strahlführung in eine, im Bearbeitungszenter vorhandene, Ruhe- /Parkposition (P) gefahren werden.

2. Verfahren nach Anspruch 1, dadurch gekennzeichnet, dass ein Strahlführungsrohr (12) parallel zur Hauptachse (L) der Werkzeugmaschine (13) angeordnet wird und dieses beim Werkzeugwechsel zur Hauptachse (L) in einem orthogonalen Bereich verschwenkt wird.

3. Verfahren nach Anspruch 1 oder 2, dadurch gekennzeichnet, dass in einem ersten Verfahrensschritt der Laser-Bearbeitungskopf (K) auf das Werkstück einwirkt, dass nach dessen Einsatz dieser in seine Parkposition (P) ausgeschwenkt wird, dass in einem zweiten Verfahrensschritt mindestens eine mit dem Laser-Bearbeitungskopf (K) erstellte Markierung und/oder Öffnung im Werkstück vermessen wird, dass mit den Koordinaten dieser Vermessung eine rechnerische Nullpunkt-Korrektur zur Justierung der Position des Werkstücks in Bezug auf die Hauptachse (L) vorgenommen wird, und dass in einem nachfolgenden Werkzeugwechsel die spanenden und/oder weiteren Bearbeitungsoperation vorgenommen werden.

4. Werkzeugmaschine zur Durchführung des Verfahrens nach einem der Ansprüche 1 bis 4, zur Bearbeitung von Werkstücken mittels einer Laserquelle mit angeschlossener Strahlformung und einer Strahlführung bei konstanter Länge des Strahlenganges, sowie mit einer Werkzeugmaschine mit spanenden Werkzeugen und numerischer Steuerung, dadurch gekennzeichnet, dass der Laser-Bearbeitungskopf (K) mit seiner optischen Achse (X--X) starr und koaxial zur Hauptachse (L) der Werkzeugmaschine (13) ausgebildet ist und dass der Laserstrahl (5) koaxial oder seitlich in den Bearbeitungskopf (K) einführbar ist.

5. Werkzeugmaschine nach Anspruch 4, dadurch gekennzeichnet, dass eine Laserquelle (1) mit einem Gelenkarm (11) mit Strahlrohren (12) und Gelenken (A - D) an die Werkzeugmaschine (13) angeschlossen ist.

6. Werkzeugmaschine nach Anspruch 5, dadurch gekennzeichnet, dass ein Laser-Bearbeitungskopf (K) mit einer Fokussieroptik (35) am strahlseitig letzten Gelenk (D) am Gelenkarm (11) angeschlossen ist.

7. Werkzeugmaschine nach Anspruch 6, dadurch gekennzeichnet, dass der Laser-Bearbeitungskopf (K) mit seiner Fokussieroptik (35) eine Spannvorrichtung (36) aufweist, welche in die Werkzeugaufnahme (37) der Werkzeugmaschine (13) einschieb- und fixierbar ist.

8. Werkzeugmaschine nach Anspruch 4, dadurch gekennzeichnet, dass die Spannvorrichtung (37) ein Zentrierkonus (36) ist.

9. Werkzeugmaschine nach Anspruch 4, dadurch gekennzeichnet, dass eine axial verschiebliche Laserquelle (1') über fest montierte Spiegel den Laserstrahl (5') in die Hauptachse (L) der Werkzeugmaschine (13) lenkt und dass der Spindelstock (14',17) eine als Hohlwelle (60) ausgebildete Motorspindel aufweist, durch welche der Laserstrahl (5') geführt ist.

10. Werkzeugmaschine nach Anspruch 9, dadurch gekennzeichnet, dass ein mit einer durchgehenden Bohrung (63) versehener Laser-Bearbeitungskopf (K) mit Fokussieroptik (35) vorgesehen ist, welcher in eine Aufnahmevorrichtung (37) in der Hohlwelle (60) einschieb- und fixierbar ist und die den Laserstrahl (5') koaxial zu einem Werkstück lenkt.

11. Werkzeugmaschine nach Anspruch 8, dadurch gekennzeichnet, dass eine Laserquelle (1') an der Werkzeugmaschine (13) angeflanscht ist und dass diese den Laserstrahl (5') mittelbar oder unmittelbar in die Hohlwelle (60) einkoppelt.
